(19) Europäisches Patentamt
European Patent Office
Office européen des brevets

(11) **EP 4 668 899 A1**

(12) **EUROPEAN PATENT APPLICATION**
published in accordance with Art. 153(4) EPC

(43) Date of publication:
**24.12.2025 Bulletin 2025/52**

(21) Application number: **23921903.3**

(22) Date of filing: **16.02.2023**

(51) International Patent Classification (IPC):
*H04W 52/14* ^(2009.01)

(52) Cooperative Patent Classification (CPC):
**H04B 1/04; H04W 52/14; H04W 72/044;**
**H04W 72/1268; Y02D 30/70**

(86) International application number:
**PCT/CN2023/076605**

(87) International publication number:
**WO 2024/168749 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Beijing Xiaomi Mobile Software Co.,**
**Ltd.**
**Beijing 100085 (CN)**

(72) Inventor: **LUO, Xingyi**
**Beijing 100085 (CN)**

(74) Representative: **Dehns Germany Partnerschaft**
**mbB**
**Theresienstraße 6-8**
**80333 München (DE)**

(54) **POWER DETERMINATION METHOD AND APPARATUS, DEVICE AND STORAGE MEDIUM**

(57) The present application relates to the field of mobile communications. Disclosed are a power determination method and apparatus, a device and a storage medium. The method comprises: a terminal receiving power control information, wherein the power control information is used for indicating a power control parameter set of each panel among a plurality of panels, the power control parameter set is used by a terminal to determine the transmission power of each panel, and the plurality of panels support uplink transmission at the same moment using corresponding transmission powers; and determining the transmission power for uplink transmission of each panel on the basis of the power control information. In the solution provided by the embodiments of the present application, when a terminal performs uplink transmission by means of a plurality of panels, the transmission power of each antenna panel can be determined on the basis of a power control parameter set of each panel, and then the transmission power for uplink transmission of each panel is determined according to the determined transmission power, such that the limitations whereby the transmission power of only a single panel can be determined are broken, and the transmission reliability is thus ensured.

step 401, the network device sends power control information that indicates a power control parameter set of each panel in a plurality of panels, the power control parameter set is used by the terminal to determine a transmit power of each panel, and the plurality of panels support an uplink transmission at the same moment according to respective transmit powers

step 402, the terminal receives the power control information

step 403, the terminal determines the transmit power of each panel for the uplink transmission based on the power control information

FIG. 4

## Description

### TECHNICAL FIELD

The present disclosure relates to the field of mobile communication, and more particularly relates to a power determination method, a power determination apparatus, a device and a storage medium.

### BACKGROUND

In a mobile communication system, a solution is proposed for a terminal to perform data transmissions with multiple transmission reception points (TRPs). A network device configures a power control parameter set for each TRP in the multiple TRPs for the terminal. When the terminal subsequently performs an uplink transmission, it determines the transmit power for the uplink transmission according to the power control parameter set. However, for each uplink transmission, the terminal only determines the transmit power between a single panel and a single TRP, which has limitations.

### SUMMARY

Embodiments of the present disclosure provide a power determination method, a power determination apparatus, a device and a storage medium, which breaks through the limitations of only being able to determine the transmit power of a single panel, thereby ensuring the transmission reliability. The technical solutions are as follows.

According to a first aspect of the present disclosure, a power determination method is provided, which is performed by a terminal and includes: receiving power control information that indicates a power control parameter set of each panel in a plurality of panels, the power control parameter set is used by the terminal to determine a transmit power of each panel, and the plurality of panels support an uplink transmission at the same moment according to respective transmit powers; and determining the transmit power of each panel for the uplink transmission based on the power control information.

According to a second aspect of the present disclosure, a power determination method is provided, which is performed by a network device and includes: sending power control information that indicates a power control parameter set of each panel in a plurality of panels, the power control parameter set is used by the terminal to determine a transmit power of each panel, and the plurality of panels support an uplink transmission at the same moment according to respective transmit powers.

According to a third aspect of the present disclosure, a power determination apparatus is provided, which includes: a receiving module configured to receive power control information, and a processing module configured to determine a transmit power of each panel for an uplink transmission based on the power control information. The power control information indicates a power control parameter set of each panel in a plurality of panels, the power control parameter set is used by the terminal to determine the transmit power of each panel, and the plurality of panels support the uplink transmission at the same moment according to respective transmit powers.

According to a fourth aspect of the present disclosure, a power determination apparatus is provided, which includes: a sending module configured to send power control information. The power control information indicates a power control parameter set of each panel in a plurality of panels, the power control parameter set is used by the terminal to determine a transmit power of each panel, and the plurality of panels support an uplink transmission at the same moment according to respective transmit powers.

According to a fifth aspect of the present disclosure, a terminal is provided, which includes: a processor, a transceiver connected to the processor, and a memory for storing instructions executable by the processor. The processor is configured to load and execute the executable instructions to implement the power determination method according to the first aspect as described above.

According to a sixth aspect of the present disclosure, a network device is provided, which includes: a processor, a transceiver connected to the processor, and a memory for storing instructions executable by the processor. The processor is configured to load and execute the executable instructions to implement the power determination method according to the second aspect as described above.

According to a seventh aspect of the present disclosure, a communication system is provided, which includes a terminal configured to implement the power determination method according to the first aspect as described above, and a network device configured to implement the power determination method according to the second aspect as described above.

According to an eighth aspect of the present disclosure, a computer-readable storage medium is provided, which has stored therein executable program codes that, when loaded and executed by a processor, cause the power determination method according to the first or second aspect as described above to be implemented.

According to a ninth aspect of the present disclosure, a chip is provided, which includes a programmable logic circuit and/or program instructions for implementing the power determination method according to the first or second aspect as described above when the chip is run on a terminal or a network device.

According to a tenth aspect of the present disclosure, a computer program product is provided that, when executed by a processor of a terminal or a network device, is configured to implement the power determination method according to the first or second aspect as described above.

In the solution provided in the embodiments of the present disclosure, when the terminal performs an uplink transmission via the plurality of panels, the transmit power of each antenna panel may be determined based on the power control parameter set of each panel, and then the transmit power of each panel for the uplink transmission is determined according to the determined transmit power, so as to support the plurality of panels to perform the uplink transmission at the same time at appropriate transmit powers, thereby improving the throughput of the uplink transmission without causing greater interference to other transmissions.

## BRIEF DESCRIPTION OF THE DRAWINGS

In order to more clearly illustrate the technical solutions in embodiments of the present disclosure, the accompanying drawings to be used in the description of embodiments will be briefly introduced below. Apparently, the drawings in the following description only show some embodiments of the present disclosure. For those of ordinary skill in the art, other drawings may be obtained according to these drawings without any creative labor.

FIG. 1 shows a block diagram of a communication system provided in an illustrative embodiment of the present disclosure.

FIG. 2 shows a block diagram of another communication system provided in an illustrative embodiment of the present disclosure.

FIG. 3 shows a block diagram of another communication system provided in an illustrative embodiment of the present disclosure.

FIG. 4 shows a flow chart of a power determination method provided in an illustrative embodiment of the present disclosure.

FIG. 5 shows a flow chart of a power determination method provided in an illustrative embodiment of the present disclosure.

FIG. 6 shows a schematic diagram of transmission channels for a terminal provided in an illustrative embodiment of the present disclosure.

FIG. 7 shows a schematic diagram of transmission channels for another terminal provided in an illustrative embodiment of the present disclosure.

FIG. 8 shows a block diagram of a power determination apparatus provided in an illustrative embodiment of the present disclosure.

FIG. 9 shows a block diagram of a power determination apparatus provided in an illustrative embodiment of the present disclosure.

FIG. 10 shows a schematic block diagram of a communication device provided in an illustrative embodiment of the present disclosure.

## DETAILED DESCRIPTION

In order to make objects, technical solutions and advantages of the present disclosure clearer, embodiments of the present disclosure will be further described in detail below in combination with the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects of the present disclosure as recited in the appended claims.

Terms used in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first", "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. For example, as used herein, the term "if" may be construed to mean "when", "upon" or "in response to determining" depending on the context.

It should be noted that information (including, but not limited to, user device information, user personal information, and the like), data (including, but not limited to, data used for analysis, stored data, displayed data, and the like) and signals involved in the present disclosure are all authorized by users or fully authorized by all parties, and the collection, use and processing of relevant data must comply with relevant laws, regulations and standards of relevant countries and regions.

First, the application scenarios of the present disclosure are explained below.

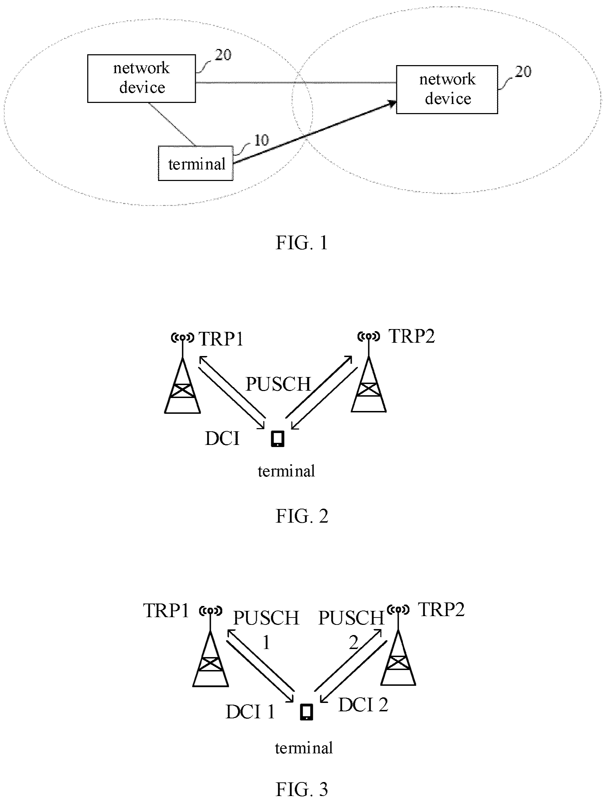

FIG. 1 shows a block diagram of a communication system according to an illustrative embodiment of the present disclosure. The communication system may include a terminal 10 and a network device 20.

The communication system generally includes a plurality of terminals 10, and one or more terminals 10 may be distributed in a cell managed by each network device 20. The terminal 10 may include various devices with wireless communication functions, like handheld devices, vehicle-mounted devices, wearable devices, computing devices or other processing devices connected to wireless modems, as well as various forms of a user equipment (UE), mobile stations (MSs) and so on. For convenience of description, in embodiments of the present disclosure, the above-mentioned devices are collectively referred to as terminals.

The network device 20 is a device deployed in an access network to provide the wireless communication function for the terminal 10. For the convenience of description, in embodiments of the present disclosure, the above-mentioned devices that provide the wireless communication function for the terminal 10 are collectively referred to as network devices. A connection may be established between the network device 20 and the terminal 10 via a radio, so that communications, including signaling and data interactions, may be performed through the connection. There may be a plurality of network devices 20, and two adjacent network devices 20 may be communicated in a wired or wireless manner. The terminal 10 may perform transmissions of beam reports between different network devices 20, that is, establish connections with different network devices 20.

The network device 20 may include various forms of macro base stations, micro base stations, relay stations, access points, etc. In systems using different wireless access technologies, the device with the network device function may have different names, for example, it is called gNodeB or next generation NodeB (gNB) in a 5G new radio (NR) system. As the communication technology evolves, the name for the "network device" may change.

Optionally, at least two TRPs are provided on the network device 20; or at least two network devices 20 are provided, each of which is provided with at least one TRP, that is, at least two network devices 20 are provided with at least two TRPs. That is, at least two TRPs may come from the same cell or different cells.

In some embodiments, four TRPs are provided on the network device 20, services may be provided to the terminal 10 via the four TRPs, and the terminal may perform data transmissions based on the four TRPs.

For example, if the network device 20 is provided with two TRPs, namely TRP1 and TRP2. Referring to FIGS. 2 and 3, the terminal transmits uplink data to the two TRPs at the same moment, that is, the terminal may not only transmit uplink data to TRP1 at the same moment, but also transmit uplink data to TRP2 at this moment.

Optionally, referring to FIG. 2, the terminal sends data to TRP1 and TRP2 via two panels by scheduling the same PUSCH via one DCI. Referring to FIG. 3, the terminal sends data from panel 1 to TRP1 via PUSCH 1 scheduled by DCI 1, and sends data from panel 2 to TRP2 via PUSCH 2 scheduled by DCI 2.

Specifically, when the terminal transmits uplink data to the TRP, it may also determine the uplink transmit power based on open loop power control parameters and closed loop power control parameters, so as to transmit the uplink data to each TRP according to the determined uplink transmit power.

For example, taking the power control of a physical uplink shared channel (PUSCH) as an example, how to determine the transmit power for the PUSCH is described. The following formula is used to determine the transmit power for the PUSCH without exceeding a transmit power limit:

$$P = P0 + \alpha \times PL + f(l) + \Delta$$

where $f(l)$ is a power control adjustment state value, also known as a closed loop power control parameter. The value of $f(l)$ is $f(l) = \delta(l)$ or $f(l, i) = f(i - i_0, l) + \sum \delta$, and the specific calculation method of $f(l)$ is indicated by high-level parameters, where $\delta$ is a value indicated by downlink control information (DCI) via a transmission power control (TPC) field. $l$ is called a closed loop power index, $i$ is a time used to indicate a current moment, $P_0$ is a target open loop receiver power which is the desired received power configured for the network device, $\alpha$ is a partial path loss compensation factor, $PL$ the estimated downlink path loss, and $\Delta$ is other adjustment quantities.

Optionally, $f(i, l, t) = f(i - i_0, l, t) + \sum \delta$, where $t$ is an identifier of a TRP, $\delta$ is a closed loop power adjustment value indicated by a TPC command, $i$ is a time used to indicate a current moment, and $f(i, l, t)$ is the accumulated closed loop power adjustment value of each TRP.

The "5G NR system" in the embodiments of the present disclosure may also be referred to as a 5G system or an NR system, but those skilled in the art may understand its meaning. The technical solution described in the embodiments of the present disclosure may be applied to the 5G NR system, and also may be applied to a subsequent evolution system of the 5G NR system.

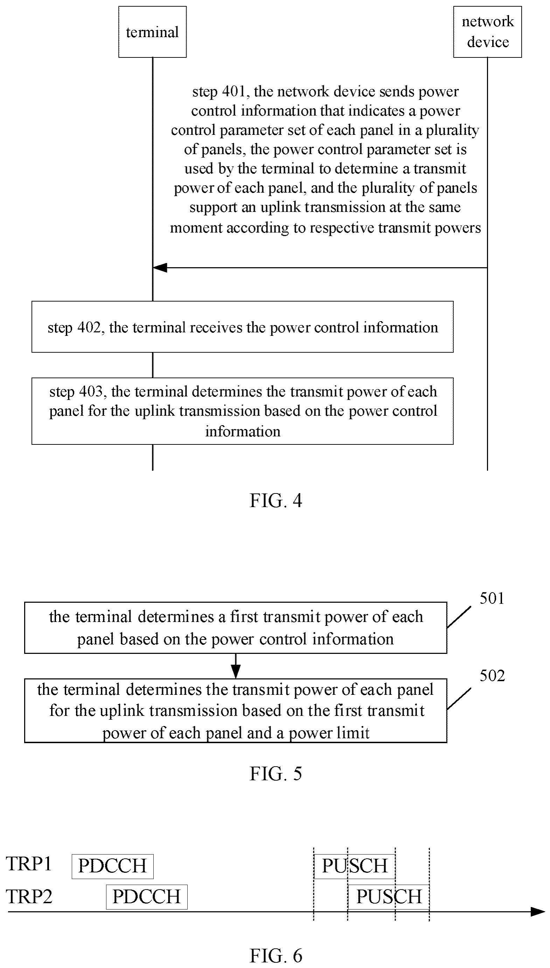

FIG. 4 shows a flow chart of a power determination method provided in an illustrative embodiment of the present disclosure. For example, the method may be applied to the terminal and the network device shown in FIG. 1. The method includes at least some of the following contents.

At step 401, the network device sends power control information that indicates a power control parameter set of each panel in a plurality of panels, the power control parameter set is used by the terminal to determine a transmit power of each panel, and the plurality of panels support an uplink transmission at the same moment according to respective transmit powers.

The panel is used by the terminal to perform an uplink transmission or a downlink transmission. The panel may be understood as a group of antennas that may form directional signals by beamforming, transmit information to a TRP in a specific beam direction, and one panel may only send signals in one beam direction at a time. In some embodiments, the panel may also be called an antenna panel, a beam used for an uplink transmission, a transmission identifier, or other names, which is not limited in the embodiments of the present disclosure. The transmission identifier indicates identifiers of different modules used for a transmission set by the terminal.

The same moment means that time domain resources of a plurality of panels for an uplink transmission are completely overlapped, or time domain resources of a plurality of panels for an uplink transmission are partially overlapped.

The plurality of panels support a simultaneous uplink transmission from the plurality of panels, which may also be understood as the terminal supporting the simultaneous uplink transmission from the plurality of panels to multiple TRPs. That is, the terminal may simultaneously determine the transmit powers of the plurality of panels for an uplink transmission, so as to perform the uplink transmission according to the determined transmit powers for the uplink transmission.

In some embodiments, the power control information is carried in DCI, a media-access-control control element (MAC CE) or a radio resource control (RRC), which is not limited in the embodiments of the present disclosure.

In some embodiments, the power control parameter set includes at least one of: (1) a closed loop power index, (2) a target open loop receiver power, (3) a partial path loss compensation factor, or (4) an estimated downlink path loss.

The various parameters in these embodiments of the present disclosure are the same as the parameters in the above embodiments, which will not be elaborated in these embodiments of the present disclosure.

At step 402, the terminal receives the power control information.

In the solution provided in the embodiments of the present disclosure, the network device sends power control information to the terminal to indicate a power control parameter set of each panel in the plurality of panels, and the terminal may determine the transmit power of the respective panel according to the power control parameter set.

At step 403, the terminal determines the transmit power of each panel for the uplink transmission based on the power control information.

The power control information received by the terminal includes a power control parameter set of each antenna panel, and the power control parameter set is used by the terminal to determine the transmit power of the respective antenna panel. Therefore, the terminal may determine the transmit power for the uplink transmission based on the received power control information.

It should be noted that the steps executed by the terminal in the embodiments of the present disclosure may independently form a new embodiment, and the steps executed by the network device may independently form a new embodiment, which is not limited in the embodiments of the present disclosure.

In the solution provided in the embodiments of the present disclosure, when the terminal performs an uplink transmission via the plurality of panels, the transmit power of each antenna panel may be determined based on the power control parameter set of each panel, and then the transmit power of each panel for the uplink transmission is determined according to the determined transmit power, so as to support the plurality of panels to perform the uplink transmission at the same time at appropriate transmit powers, thereby improving the throughput of the uplink transmission without causing greater interference to other transmissions.

In some embodiments, referring to FIG. 5, the process of determining the transmit power of each panel for the uplink transmission based on the power control information by the terminal includes the following steps.

At step 501, the terminal determines a first transmit power of each panel based on the power control information.

In the embodiments of the present disclosure, the power control information is sent by the network device, which may also be understood as the power control information being indicated by the network device. In some embodiments, the first transmit power of each panel determined by the terminal based on the power control information actually refers to the transmit power that the network device expects the terminal to use when performing the uplink transmission via each panel.

In some embodiments, the first transmit power is determined using the following formula:

$$P = P0 + \alpha \times PL + f(l) + \Delta$$

where P is the first transmit power of the panel, $f(l)$ is a power control adjustment state value, also known as a closed loop power control parameter. The value of $f(l)$ is $f(l) = \delta(l)$ or $f(l, i) = f(i - i_0, l) + \sum \delta$, and the specific calculation method of $f(l)$ is indicated by high-level parameters, where $\delta$ is a value indicated by DCI via a TPC field. $l$ is called a closed loop power index, $i$ is a time used to indicate a current moment, $P_0$ is a target open loop receiver power which is the desired received power configured for the network device, $\alpha$ is a partial path loss compensation factor, $PL$ is the estimated downlink path loss, and $\Delta$ is other adjustment quantities.

At step 502, the terminal determines the transmit power of each panel for the uplink transmission based on the first transmit power of each panel and a power limit.

The power limit refers to a limit on the transmit power of the terminal itself. The terminal sets the power limit to ensure that the terminal determines that the transmit power of each panel for the uplink transmission does not exceed the power limit.

Optionally, the power limit is agreed upon by a communication protocol, or is specified when the terminal leaves a factory, or is set by the terminal, or is set in other ways, which is not limited in the embodiments of the present disclosure.

In some embodiments, the power limit refers to the first power limit defined for each panel, which may also be understood as each panel corresponding to a first power limit. After determining the first transmit power of each panel, the terminal needs to compare the first transmit power of each panel with the first power limit for each panel to further determine the actual transmit power of the panel for the uplink transmission.

In some embodiments, the power limit refers to the total power limit defined for the terminal. After determining the first transmit power of each panel, the terminal needs to compare the sum of the first transmit powers of all panels with the total power limit, and then the terminal determines the transmit power of the respective panel for the uplink transmission.

In some embodiments, the power limit includes a first power limit defined for each panel and a total power limit defined for the terminal. The terminal not only needs to compare the first transmit power of each panel with the first power limit for each panel, but also needs to compare the sum of the first transmit powers of all panels with the sum of the first power limits, and then the terminal determines the transmit power of the respective panel for the uplink transmission.

Next, determining the transmit power of each panel for the uplink transmission based on the first transmit power of each panel and the power limit by the terminal includes any of the following procedures.

The first procedure is to determine a minimum transmit power between the first transmit power of each panel and the first power limit corresponding to each panel as the transmit power of each panel for the uplink transmission.

In an embodiment of the present disclosure, each panel of the terminal corresponds to a first transmit power and a first power limit. If the first transmit power is greater than the first power limit, the terminal cannot provide the required first transmit power. If the first transmit power is less than the first power limit, the terminal does not need to operate according to the first power limit. Therefore, the terminal determines the minimum transmit power between the first transmit power of each panel and the first power limit corresponding to each panel as the transmit power of each panel for the uplink transmission.

For example, if the first transmit power of a panel is less than the first power limit for the panel, the first transmit power of the panel is determined as the transmit power of the panel for the uplink transmission; and if the first transmit power of a panel is greater than the first power limit for the panel, the first power limit for the panel is determined as the transmit power of the panel for the uplink transmission.

The second procedure is to determine the first transmit power of each panel as the transmit power of each panel for the uplink transmission.

The third procedure is to determine the transmit power of each panel for the uplink transmission according to a ratio of the first transmit powers of the plurality of panels and the total power limit.

Each of the plurality of panels corresponds to a first transmit power, and the terminal also has a total power limit. At this time, the total power limit may be divided according to the ratio of the first transmit powers of the plurality of panels to obtain the transmit power of each panel in the plurality of panels for the uplink transmission.

The above-mentioned third procedure of determining the transmit power of each panel for the uplink transmission may also be understood as, for each panel in the plurality of panels, obtaining the proportion of the first transmit power of the panel in the sum of the first transmit powers of all panels, and determining the product of the obtained proportion of the panel and the total power limit as the transmit power of the panel for the uplink transmission.

For example, if the panels include panel 1 and panel 2, the first transmit power of panel 1 is $P_1$, the first transmit power of panel 2 is $P_2$, and the total power limit is $P_{cmax}$, then the transmit power $P_{panel1}$ of panel 1 for the uplink transmission is $P_{panel1} = P_1 * P_{cmax}/(P_1+P_2)$, and the transmit power $P_{panel2}$ of panel 2 for the uplink transmission is $P_{panel2} = P_2 * P_{cmax}/(P_1+P_2)$.

The fourth procedure is to determine a transmit power of a panel with a higher priority to be a minimum value between the first transmit power and the first power limit of the panel with the higher priority and back off a transmit power of a panel with a lower priority according to a priority order of the plurality of panels, so that the sum of the transmit powers determined for the plurality of panels is not greater than the total power limit.

In an embodiment of the present disclosure, each panel has a priority, and the terminal may sort the panels according to the priorities, giving priority to the transmit power of a panel with a high priority. For a panel with a low priority, if the terminal cannot meet the total transmit power limit, the transmit power of a panel with a lower priority may be backed off.

In some embodiments, for a first panel having the highest priority among all panels, a minimum value between the first transmit power and the first power limit of the first panel is determined as the transmit power of the first panel for the uplink transmission. For the remaining panels except the first panel among all the panels, power backing-off is performed on the remaining panels, so that the sum of the determined transmit power of the first panel for the uplink transmission and the backed-off transmit powers of the remaining panels is not greater than a total power threshold.

How to determine the priorities of the panels is described below.

In some embodiments, the terminal determines the priority of each panel by acquiring the channel measurement result of each panel. Optionally, the priority of each panel is directly proportional to the channel measurement result. It may also be understood that the higher the quality of the channel measurement result of a panel, the higher the priority of the panel.

Optionally, the channel measurement result includes a reference signal receiving quality (RSRQ), a signal-to-noise ratio or other parameters, which is not limited in the embodiments of the present disclosure.

In other embodiments, the terminal determines the priority of each panel according to the type of a service processed by each panel. For example, the service type includes at least one of an enhanced mobile broadband (eMBB) or an ultra reliable low latency communication (URLLC). The priority of a panel performing the eMBB transmission is higher than the priority of a panel performing the URLLC transmission, or the priority of a panel performing the eMBB transmission is lower than the priority of a panel performing the URLLC transmission.

In other embodiments, the terminal determines the priority of each panel according to the channel type of each panel. For example, the channel type includes at least one of a configured grant (CG) PUSCH or a dynamic grant (DG, periodic) PUSCH. The priority of a panel performing a transmission on the CG PUSCH is higher than the priority of a panel performing a transmission on the DG PUSCH, or the priority of a panel performing a transmission on the CG PUSCH is lower than the priority of a panel performing a transmission on the DG PUSCH.

In other embodiments, the terminal determines the priority of each panel based on the transmission time of a channel on which each panel performs a transmission. Optionally, the earlier the transmission time of a channel is, the higher the priority of the panel corresponding to the channel is.

For the above four procedures of determining the transmit power of each panel for the uplink transmission, execution conditions are required for each procedure. The conditions required for each procedure are described below.

In some embodiments, the power limit is a first power limit for each panel. In this case, there are two conditions to implement the first procedure described above.

Optionally, if the plurality of panels perform transmissions on a PUSCH scheduled by a single DCI, respectively, the minimum transmit power between the first transmit power of each panel and the first power limit corresponding to each panel is determined as the transmit power of each panel for the uplink transmission.

Optionally, if the plurality of panels perform transmissions on PUSCHs scheduled by multiple DCIs, respectively, the minimum transmit power between the first transmit power of each panel and the first power limit corresponding to each panel is determined as the transmit power of each panel for the uplink transmission.

For example, the plurality of panels include panel 1 and panel 2, the transmit power of panel 1 is $P_{panel1}$, the transmit power of panel 2 is $P_{panel2}$, $P_{panel1} = min\{P_{cmax1}, P_1\}$; $P_{panel2} = min\{P_{cmax2}, P_2\}$, $P_{cmax1}$ is the first power limit for panel 1, and $P_{cmax2}$ is the first power limit for panel 2.

In some embodiments, the power limit is an overall power limit. In this case, there are multiple conditions to implement any of the above procedures.

Optionally, the plurality of panels perform transmissions on PUSCHs scheduled by a single DCI. If the sum of the first transmit powers of the plurality of panels is not greater than the total power limit, the first transmit power of each panel is determined as the transmit power of each panel for the uplink transmission.

For example, taking two panels as an example, $P_1 + P_2 \le P_{cmax}$, then the transmit power $P_{panel1} = P_1$, and $P_{panel2} = P_2$.

In some embodiments, if the sum of the first transmit powers of the plurality of panels is greater than the total power limit, the transmit power of each panel for the uplink transmission is determined according to the ratio of the first transmit powers of the plurality of panels and the total power limit.

It should be noted that the plurality of panels perform transmissions on PUSCHs scheduled by multiple DCIs. Moreover, if the sum of the first transmit powers of the plurality of panels is greater than the total power limit, the transmit power of each panel for the uplink transmission is determined according to the ratio of the first transmit powers of the plurality of panels and the total power limit.

For example, taking two panels as an example, if $P_1 + P_2 > P_{cmax}$, powers are allocated to the two panels according to the respective power ratios. $P_{panel1} = P_1*P_{cmax}/(P_1+P_2)$, $P_{panel2} = P_2*P_{cmax}/(P_1+P_2)$.

Optionally, if time domain resources occupied by PUSCHs scheduled by multiple DCIs transmitted by the plurality of panels are overlapped, and the terminal supports changing the transmit power at a transmission occasion, for a non-overlapped part, the minimum transmit power between the first transmit power of each panel and the total power limit corresponding to each panel is determined as the transmit power of each panel for the uplink transmission.

For example, as shown in FIG. 6, there is an overlapped part between the PUSCH for TRP1 and the PUSCH for TRP2, and there are also non-overlapped parts between the PUSCH for TRP1 and the PUSCH for TRP2. Taking two panels as an example, for the non-overlapped parts, $P_{panel1} = min\{P_{cmax}, P_1\}$, or $P_{panel2} = min\{P_{cmax}, P_2\}$.

Optionally, when it is determined that the time domain resources occupied by the plurality of panels are overlapped, the plurality of panels perform transmissions on PUSCHs scheduled by multiple DCIs, respectively, and the terminal supports changing the transmit power at a transmission occasion, for the overlapped part, if the sum of the first transmit powers of the plurality of panels is greater than the total power limit, the transmit power of each panel for the uplink transmission is determined according to the ratio of the first transmit powers of the plurality of panels and the total power limit.

For example, taking two panels as an example, the plurality of panels of the terminal perform transmissions on PUSCHs scheduled by multiple DCIs, respectively, and the terminal supports changing the transmit power at a transmission occasion. For the overlapped part, if $P_1+P_2 > P_{cmax}$, powers are allocated to the two panels according to the respective power ratios. $P_{panel1} = P_1*P_{cmax}/(P_1+P_2)$, $P_{panel2} = P_2*P_{cmax}/(P_1+P_2)$.

Optionally, when it is determined that time domain resources occupied by the plurality of panels are overlapped, the plurality of panels perform transmissions on PUSCHs scheduled by multiple DCIs, respectively, and the terminal supports changing the transmit power at a transmission occasion, for the overlapped part, if the sum of the first transmit powers of the plurality of panels is not greater than the total power limit, the first transmit power of each panel is determined as the transmit power of each panel for the uplink transmission.

For example, taking two panels as an example, the plurality of panels of the terminal perform transmissions on PUSCHs scheduled by multiple DCIs, respectively, and the terminal supports changing the transmit power at a transmission occasion. For the overlapped part, if $P_1 + P_2 \leq P_{cmax}$, the transmit powers of the respective panels are $P_{panel1} = P_1$, and $P_{panel2} = P_2$.

Optionally, if the sum of the first transmit powers of the plurality of panels is greater than the total power limit, according to a priority order of the plurality of panels, a transmit power of a panel with a higher priority is determined to be a minimum value between the first transmit power and the first power limit of the panel with the higher priority, and a transmit power of a panel with a lower priority is backed off, so that the sum of the transmit powers determined for the plurality of panels is not greater than the total power limit.

Furthermore, when it is determined that time domain resources occupied by the plurality of panels are overlapped, the plurality of panels perform transmissions on PUSCHs scheduled by multiple DCIs, respectively, and the terminal supports changing the transmit power at a transmission occasion, for the overlapped part, if the sum of the first transmit powers of the plurality of panels is greater than the total power limit, according to the priority order of the plurality of panels, the transmit power of a panel with a higher priority is determined to be a minimum value between the first transmit power and the first power limit of the panel with the higher priority, and the transmit power of a panel with a lower priority is backed off, so that the sum of the transmit powers determined for the plurality of panels is not greater than the total power limit.

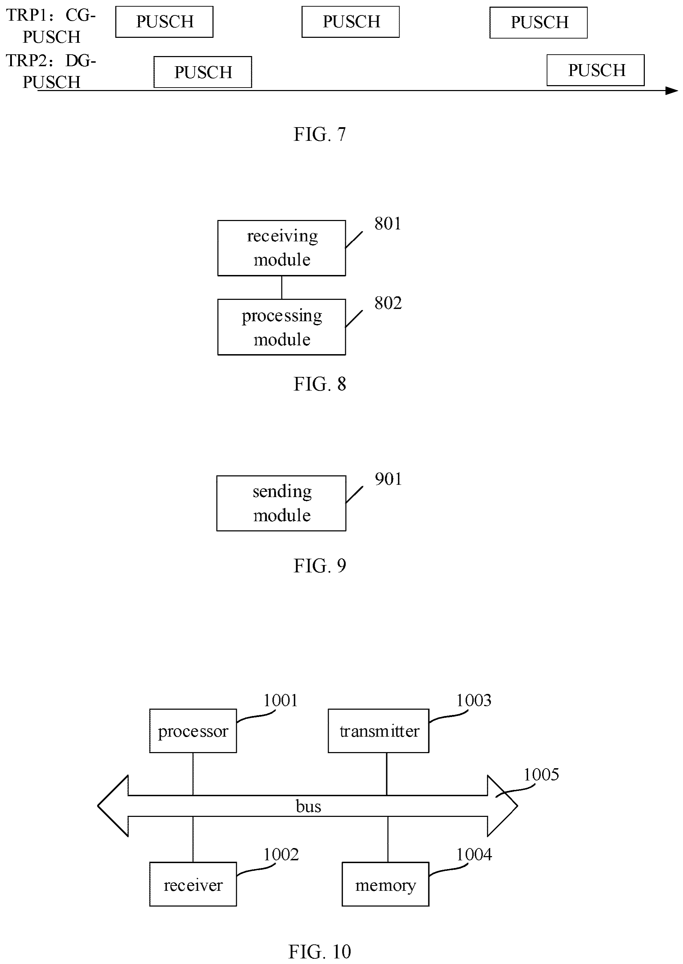

For example, two panels performing transmissions on a DG PUSCH and a CG PUSCH respectively are taken as an example. Referring to FIG. 7, TRP1 performs a transmission on a CG PUSCH, TRP2 performs a transmission on a DG PUSCH, the plurality of panels of the terminal perform transmissions on PUSCHs scheduled by multiple DCIs, respectively, and the terminal supports changing the transmit power at a transmission occasion. For the overlapped part, the transmit power for the DG PUSCH is guaranteed preferentially, the CG PUSCH is transmitted at $P_{panel1}$, and the DG PUSCH is transmitted at $P_{panel2}$, that is, $P_{panel2} = \min\{P_{cmax}, P_2\}$. If $P_2 \leq P_{cmax}$, then $P_{panel1} = P_1-X$, where $X \geq P_1 + P_2 - P_{cmax}$. If $P_2 > P_{cmax}$, then $P_1 = 0$.

Optionally, when the terminal does not support changing the transmit power at a transmission occasion, the plurality of panels perform transmissions on PUSCHs scheduled by multiple DCIs, respectively, and it is determined that multiple panels perform the uplink transmission, if the sum of the first transmit powers of the plurality of panels is greater than the total power limit, the transmit power of each panel for the uplink transmission is determined according to the ratio of the first transmit powers of the plurality of panels and the total power limit.

For example, taking two panels as an example, the terminal does not support changing the transmit power at a transmission occasion, the plurality of panels perform transmissions on PUSCHs scheduled by multiple DCIs, respectively, and it is determined that multiple panels perform the uplink transmission. If $P_1 + P_2 > P_{cmax}$, powers are allocated to the two panels according to the respective power ratios, $P_{panel1} = P_1*P_{cmax}/(P_1+P_2)$, $P_{panel2} = P_2*P_{cmax}/(P_1+P_2)$.

Optionally, if the terminal does not support changing the transmit power at a transmission occasion, the plurality of panels perform transmissions on PUSCHs scheduled by multiple DCIs, respectively, and the sum of the first transmit powers of the plurality of panels is not greater than the total power limit, the minimum transmit power between the first transmit power of each panel and the first power limit corresponding to each panel is determined as the transmit power of each panel for the uplink transmission.

For example, taking two panels as an example, the terminal does not support changing the transmit power at a transmission occasion, the plurality of panels perform transmissions on PUSCHs scheduled by multiple DCIs, respectively, and it is determined that multiple panels perform the uplink transmission. If $P_1 + P_2 \leq P_{cmax}$, the transmit powers of the respective panels are $P_{panel1} = \min\{P_{cmax1}, P_1\}$, $P_{panel2} = \min\{P_{cmax2}, P_2\}$.

In some embodiments, if the sum of the first transmit powers of the plurality of panels is not greater than the total power limit, the first transmit power of each panel is determined as the transmit power of each panel for the uplink transmission.

Optionally, if the sum of the first transmit powers of the plurality of panels is greater than the total power limit, according to the priority order of the plurality of panels, the transmit power of a panel with a higher priority is determined to be a minimum value between the first transmit power of the panel with the higher priority and the total power limit, and the transmit power of a panel with a lower priority is backed off, so that the sum of the transmit powers determined for the plurality of panels is not greater than the total power limit.

Furthermore, when the terminal does not support changing the transmit power at a transmission occasion, the plurality of panels perform transmissions on PUSCHs scheduled by multiple DCIs, respectively, and it may be determined that multiple panels perform the uplink transmission simultaneously, if the sum of the first transmit powers of the plurality of panels is greater than the total power limit, according to the priority order of the plurality of panels, the transmit power of a panel with a higher priority is determined to be a minimum value between the first transmit power of the panel with the higher priority and the total power limit, and the transmit power of a panel with a lower priority is backed off, so that the sum of the transmit powers determined for the plurality of panels is not greater than the total power limit.

For example, two panels performing transmissions on a DG PUSCH and a CG PUSCH respectively are taken as an example. Referring to FIG. 7, TRP1 performs a transmission on a CG PUSCH, TRP2 performs a transmission on a DG PUSCH, the plurality of panels of the terminal perform transmissions on PUSCHs scheduled by multiple DCIs, respectively, and the terminal does not support changing the transmit power at a transmission occasion. If $P_{panel1} + P_{panel2} > P_{cmax}$, the transmit power for the DG PUSCH is guaranteed preferentially, the CG PUSCH is transmitted at $P_{panel1}$, and $P_{panel2} = \min\{P_{cmax}, P_2\}$. If $P_2 \leq P_{cmax}$, then $P_{panel1} = P_1 - X$, where $X \geq P_1 + P_2 - P_{cmax}$. If $P_2 > P_{cmax}$, then $P_1 = 0$. Optionally, when the terminal does not support changing the transmit power at a transmission occasion, the plurality of panels perform transmissions on PUSCHs scheduled by multiple DCIs, respectively, and it cannot be determined that multiple panels perform the uplink transmission, according to the priority order of the plurality of panels, the transmit power of a panel with a higher priority is determined to be a minimum value between the first transmit power and the first power limit of the panel with the higher priority, and the transmit power of a panel with a lower priority is backed off, so that the sum of the transmit powers determined for the plurality of panels is not greater than the total power limit.

For example, two panels performing transmissions on a DG PUSCH and a CG PUSCH respectively are taken as an example. Referring to FIG. 7, TRP1 performs a transmission on a CG PUSCH, TRP2 performs a transmission on a DG PUSCH, the plurality of panels of the terminal perform transmissions on PUSCHs scheduled by multiple DCIs, respectively, the terminal does not support changing the transmit power at a transmission occasion, and it cannot be determined that multiple panels perform the uplink transmission. The transmit power for the DG PUSCH is guaranteed preferentially, the CG PUSCH is transmitted at $P_{panel1}$, the DG PUSCH is transmitted at $P_{panel2}$, and the transmit power for the DG PUSCH $P_{panel2} = \min\{P_{cmax}, P_2\}$. If $P_2 \leq P_{cmax}$, then $P_{panel1} = P_1 - X$, where $X \geq P_1 + P_2 - P_{cmax}$. If $P_2 > P_{cmax}$, then $P_1 = 0$.

Optionally, the plurality of panels perform transmissions on a PUSCH scheduled by a single DCI, respectively, and the sum of the first transmit powers of the plurality of panels is not greater than the total power limit. According to the priority order of the plurality of panels, the transmit power of a panel with a higher priority is determined to be a minimum value between the first transmit power and the first power limit of the panel with the higher priority, and the transmit power of a panel with a lower priority is backed off, so that the sum of the transmit powers determined for the plurality of panels is not greater than the total power limit.

For example, panel 2 has a higher layer 1-reference signal received power (L1-RSRP), and is a high-priority panel. $P_{panel2} = \min\{P_{cmax}, P_2\}$. If $P_2 \leq P_{cmax}$, then $P_{panel1} = P_1 - X$, where $X \geq P_1 + P_2 - P_{cmax}$. If $P_2 > P_{cmax}$, then $P_1 = 0$.

In some embodiments, the power limit includes a first power limit and a total power limit. In this case, there are multiple conditions to implement any of the above procedures.

Optionally, if the sum of the first power limits for the plurality of panels is not greater than the total power limit, the minimum transmit power between the first transmit power of each panel and the first power limit corresponding to each panel is determined as the transmit power of each panel for the uplink transmission.

For example, taking two panels as an example, $P_{cmax1} + P_{cmax2} \leq P_{cmax}$, $P_{panel1} = \min\{P_{cmax1}, P_1\}$, or $P_{panel2} = \min\{P_{cmax2}, P_2\}$.

It should be noted that no matter whether the plurality of panels perform transmissions on a PUSCH scheduled by a single DCI or PUSCHs scheduled by multiple DCIs, when the above conditions are met, the minimum transmit power between the first transmit power of each panel and the first power limit corresponding to each panel is determined as the transmit power of each panel for the uplink transmission.

Optionally, if the sum of the first power limits of the plurality of antenna panels is greater than the total power limit, and the plurality of panels perform transmissions on a PUSCH scheduled by a single DCI, respectively, the minimum value between the first transmit power of each panel and the first power limit corresponding to each panel is determined as the transmit power of each panel for the uplink transmission.

Optionally, if the sum of the first power limits for the plurality of panels is greater than the total power limit, the sum of the first transmit powers of the plurality of panels is not greater than the total power limit, and the plurality of panels perform transmissions on a PUSCH scheduled by a single DCI, respectively, then the first transmit power of each panel is determined as the transmit power of each panel for the uplink transmission.

For example, taking two panels as an example, if the PUSCH on which the two panels perform transmissions is a PUSCH scheduled by a single DCI, $P_{cmax1}+P_{cmax2} > P_{cmax}$, and $P_{panel1}+P_{panel2} < P_{cmax}$, then $P_{panel1} = \min\{P_{cmax1}, P_1\}$, and $P_{panel2} = \min\{P_{cmax2}, P_2\}$.

Optionally, if the sum of the first power limits of the plurality of antenna panels is greater than the total power limit, the sum of the first transmit powers of the plurality of panels is greater than the total power limit, and the plurality of panels perform transmissions on a PUSCH scheduled by a single DCI, respectively, then the transmit power of each panel for the uplink transmission is determined according to the ratio of the first transmit powers of the plurality of panels and the sum of the first transmit powers of the plurality of panels.

For example, taking two panels as an example, if the PUSCH on which the two panels perform transmissions is a PUSCH scheduled by a single DCI, $P_{cmax1}+P_{cmax2} > P_{cmax}$, and $P_{panel1}+P_{panel2} > P_{cmax}$, then $P_{panel1} = P_1 *P_{cmax}/(P_1+P_2)$, and $P_{panel2} = P_2 *P_{cmax}/(P_1+P_2)$.

Optionally, if the sum of the first power limits of the plurality of antenna panels is greater than the total power limit, the sum of the first transmit powers of the plurality of panels is greater than the total power limit, and the plurality of panels perform transmissions on a PUSCH scheduled by a single DCI, respectively, then the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

The combination of three situations in which the sum of the first power limits of the plurality of antenna panels is greater than the total power limit is described below.

Optionally, if the sum of the first power limits of the plurality of antenna panels is greater than the total power limit, and the plurality of panels perform transmissions on a PUSCH scheduled by a single DCI, respectively, then for the transmit power of each panel, the power limits for the plurality of panels need to be considered at the same time, and the total power limit also needs to be considered. First, it is assumed that the minimum value between the first transmit power of each panel and the first power limit corresponding to each panel is determined as the transmit power of each panel for the uplink transmission, which is recorded as the second transmit power of each panel. Then, it is compared with the total power limit to determine the final transmit power. If the transmit power of each panel is less than or equal to the total transmit power limit, the transmit power of each panel is the assumed value; and if the transmit power of each panel is greater than the total transmit power limit, the transmit power of each panel for the uplink transmission is determined according to the ratio of the first transmit powers of the plurality of panels

and the sum of the first transmit powers of the plurality of panels. Alternatively, the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

For example, taking two panels as an example, if the PUSCH on which the two panels perform transmissions is a PUSCH scheduled by a single DCI, it is assumed that the transmit powers of the respective panels are $P_{panel1} = \min\{P_{cmax1}, P_1\}$, and $P_{panel2} = \min\{P_{cmax2}, P_2\}$. Furthermore, if $P_{panel1}+P_{panel2} \leq P_{cmax}$, the transmit power of each panel is this value; and if $P_{panel1}+P_{panel2} > P_{cmax}$, $P_{panel1} = P_1 *P_{cmax}/(P_1+P_2)$, and $P_{panel2} = P_2 *P_{cmax}/(P_1+P_2)$. Alternatively, if the priority of $P_{panel1}$ is higher than that of $P_{panel2}$, then $P_{panel2} = \min\{P_{cmax}, P_2\}$, and if $P_2 \leq P_{cmax}$, then $P_{panel1} = P_1 - X$, where $X \geq P_1 + P_2 - P_{cmax}$. If $P_2 > P_{cmax}$, then $P_1 = 0$.

Optionally, if the sum of the first power limits for the plurality of panels is greater than the total power limit, the plurality of panels perform transmissions on PUSCHs scheduled by multiple DCIs, respectively, time domain resources occupied by the plurality of panels are overlapped, and the terminal supports changing the transmit power at a transmission occasion, then for the non-overlapped part, the minimum transmit power between the first transmit power of each panel and the first power limit corresponding to each panel is determined as the transmit power of each panel for the uplink transmission.

For example, taking two panels as an example, the terminal supports changing the transmit power at a transmission occasion, the plurality of panels perform transmissions on PUSCHs scheduled by multiple DCIs, respectively, and $P_{cmax1}+P_{cmax2} > P_{cmax}$. For the non-overlapped part, $P_{panel1} = \min\{P_{cmax1}, P_1\}$, or $P_{panel2} = \min\{P_{cmax2}, P_2\}$.

Optionally, if the sum of the first power limits for the plurality of panels is greater than the total power limit, the sum of the first transmit powers of the plurality of panels is not greater than the total power limit, the plurality of panels perform transmissions on PUSCHs scheduled by multiple DCIs, respectively, time domain resources occupied by the plurality of panels are overlapped, and the terminal supports changing the transmit power at a transmission occasion, then for the overlapped part, the minimum transmit power between the first transmit power of each panel and the first power limit corresponding to each panel is determined as the transmit power of each panel for the uplink transmission.

For example, the plurality of panels perform transmissions on PUSCHs scheduled by multiple DCIs, respectively, the time domain resources occupied by the plurality of panels are overlapped, and the terminal supports changing the transmit power at a transmission occasion. For the overlapped part, $P_{cmax1}+P_{cmax2} > P_{cmax}$, and $P_{panel1}+P_{panel2} \leq P_{cmax}$, then $P_{panel1} = \min$

$\{P_{cmax1}, P_1\}$, or $P_{panel2} = min\{P_{cmax2}, P_2\}$.

Optionally, when it is determined that the time domain resources occupied by the plurality of panels are overlapped, if the sum of the first power limits for the plurality of panels is greater than the total power limit, the sum of the first transmit powers of the plurality of panels is greater than the total power limit, the terminal supports changing the transmit power at a transmission occasion, and the plurality of panels perform transmissions on PUSCHs scheduled by multiple DCIs, respectively, then for the overlapped part, the transmit power of each panel for the uplink transmission is determined according to the ratio of the first transmit powers of the plurality of panels and the sum of the first transmit powers of the plurality of panels.

For example, the plurality of panels perform transmissions on PUSCHs scheduled by multiple DCIs, respectively, the time domain resources occupied by the plurality of panels are overlapped, and the terminal supports changing the transmit power at a transmission occasion. For the overlapped part, $P_{cmax1}+P_{cmax2} > P_{cmax}$, and $P_{panel1}+P_{panel2} > P_{cmax}$, then $P_{panel1} = P_1 * P_{cmax}/(P_1+P_2)$, and $P_{panel2} = P_2 * P_{cmax}/(P_1+P_2)$.

Optionally, when it is determined that the time domain resources occupied by the plurality of panels are overlapped, if the sum of the first power limits for the plurality of panels is greater than the total power limit, the sum of the first transmit powers of the plurality of panels is greater than the total power limit, the terminal supports changing the transmit power at a transmission occasion, and the plurality of panels perform transmissions on PUSCHs scheduled by multiple DCIs, respectively, then for the overlapped part, the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

For example, two panels performing transmissions on a DG PUSCH and a CG PUSCH respectively are taken as an example. Referring to FIG. 7, TRP1 performs a transmission on a CG PUSCH, TRP2 performs a transmission on a DG PUSCH, the plurality of panels of the terminal perform transmissions on PUSCHs scheduled by multiple DCIs, respectively, the time domain resources occupied by the plurality of panels are overlapped, and the terminal supports changing the transmit power at a transmission occasion. For the overlapped part, $P_{cmax1}+P_{cmax2} > P_{cmax}$, $P_{panel1}+P_{panel2} > P_{cmax}$, the CG PUSCH is transmitted at $P_{panel1}$, and the DG PUSCH is transmitted at $P_{panel2}$, that is, $P_{panel2} = min\{P_{cmax2}, P_2\}$, and $P_{panel1} = min\{P_{cmax}-P_{panel2}, P_1\}$.

The combination of optional solutions is described below for the case where the sum of the first power limits for the plurality of panels is greater than the total power limit, the sum of the first transmit powers of the plurality of panels is greater than the total power limit, the terminal supports changing the transmit power at a transmission occasion, and the transmit powers of the plurality of panels are overlapped. For the overlapped part, regarding the transmit power of each panel, the power limits for the plurality of panels need to be considered at the same time, and the total power limit also needs to be considered. First, it is assumed that the minimum value between the first transmit power of each panel and the first power limit corresponding to each panel is determined as the transmit power of each panel for the uplink transmission, which is recorded as the second transmit power of each panel. Then, it is compared with the total power limit to determine the final transmit power. If the transmit power of each panel is less than or equal to the total transmit power limit, the transmit power of each panel is the assumed value; and if the transmit power of each panel is greater than the total transmit power limit, the transmit power of each panel for the uplink transmission is determined according to the ratio of the first transmit powers of the plurality of panels and the sum of the first transmit powers of the plurality of panels. Alternatively, the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

Optionally, if the sum of the first power limits for the plurality of panels is greater than the total power limit, and the plurality of panels perform transmissions on PUSCHs scheduled by multiple DCIs, respectively, the terminal does not support changing the transmit power at a transmission occasion, and the user may determine that a panel also performs a transmission on a PUSCH when determining the transmit power of another panel. It is first assumed that the minimum transmit power between the first transmit power of each panel and the first power limit corresponding to each panel is determined as the transmit power of each panel for the uplink transmission.

For example, taking two panels as an example, the plurality of panels perform transmissions on PUSCHs scheduled by multiple DCIs, respectively, and the terminal does not support changing the transmit power at a transmission occasion. $P_{cmax1}+P_{cmax2} > P_{cmax}$, then $P_{panel1} = min\{P_{cmax1}, P_1\}$, and $P_{panel2} = min\{P_{cmax2}, P_2\}$.

Optionally, if the sum of the first power limits for the plurality of panels is greater than the total power limit, the sum of the first transmit powers of the plurality of panels is not greater than the total power limit, the plurality of panels perform transmissions on PUSCHs scheduled by multiple DCIs, respectively, and the terminal does not support changing the transmit power at a transmission occasion, then the first transmit power of each panel is determined as the transmit power of each panel for the uplink transmission.

For example, taking two panels as an example, the plurality of panels perform transmissions on PUSCHs scheduled by multiple DCIs, respectively, and the terminal does not support changing the transmit power at a transmission occasion. $P_{cmax1}+P_{cmax2} > P_{cmax}$. If $P_{panel1}+P_{panel2} < P_{cmax}$, then $P_{panel1} = P_1$, and $P_{panel2} = P_2$.

Optionally, if the sum of the first power limits of the plurality of antenna panels is greater than the total power limit, the sum of the first transmit powers of the plurality of panels is greater than the total power limit, the terminal does not support changing the transmit power at a transmission occasion, and the plurality of panels perform transmissions on PUSCHs scheduled by multiple DCIs, respectively, then the transmit power of each panel for the uplink transmission is determined according to the ratio of the first transmit powers of the plurality of panels and the sum of the first transmit powers of the plurality of panels.

For example, taking two panels as an example, the plurality of panels perform transmissions on PUSCHs scheduled by multiple DCIs, respectively, and the terminal does not support changing the transmit power at a transmission occasion. $P_{cmax1}+P_{cmax2} > P_{cmax}$. If $P_{panel1}+P_{panel2} > P_{cmax}$, then $P_{panel1} = P_1 * P_{cmax}/(P_1+P_2)$, and $P_{panel2} = P_2 * P_{cmax}/(P_1+P_2)$.

Optionally, if the sum of the first power limits for the plurality of panels is greater than the total power limit, the sum of the first transmit powers of the plurality of panels is greater than the total power limit, the terminal does not support changing the transmit power at a transmission occasion, and the plurality of panels perform transmissions on PUSCHs scheduled by multiple DCIs, respectively, then the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

For example, two panels performing transmissions on a DG PUSCH and a CG PUSCH respectively are taken as an example. Referring to FIG. 7, TRP1 performs a transmission on a CG PUSCH, TRP2 performs a transmission on a DG PUSCH, the plurality of panels of the terminal perform transmissions on PUSCHs scheduled by multiple DCIs, respectively, and the terminal does not support changing the transmit power at a transmission occasion. $P_{cmax1}+P_{cmax2} > P_{cmax}$. If $P_{panel1}+P_{panel2} > P_{cmax}$, then $P_{panel2} = min\{P_{cmax2}, P_2\}$, and $P_{panel1} = min\{P_{cmax}-P_{panel2}, P_1\}$.

The combination of the above possible solutions is described below for the case where the sum of the first power limits for the plurality of panels is greater than the total power limit, the sum of the first transmit powers of the plurality of panels is greater than the total power limit, and the terminal does not support changing the transmit power at a transmission occasion.

Optionally, regarding the transmit power of each panel, the power limits for the plurality of panels need to be considered at the same time, and the total power limit also needs to be considered. First, it is assumed that the minimum value between the first transmit power of each panel and the first power limit corresponding to each panel is determined as the transmit power of each panel for the uplink transmission, which is recorded as the second transmit power of each panel. Then, it is compared with the total power limit to determine the final transmit power. If the transmit power of each panel is less than or equal to the total transmit power limit, the transmit power of each panel is the assumed value; and if the transmit power of each panel is greater than the total transmit power limit, the transmit power of each panel for the uplink transmission is determined according to the ratio of the first transmit powers of the plurality of panels and the sum of the first transmit powers of the plurality of panels. Alternatively, the transmit powers of the respective panels for the uplink transmission are sequentially determined according to the priority order of the plurality of panels and based on the first transmit powers of the panels, until the sum of the determined transmit powers of the panels for the uplink transmission reaches the total power limit.

Optionally, if the sum of the first power limits for the plurality of panels is greater than the total power limit, the plurality of panels perform transmissions on PUSCHs scheduled by multiple DCIs, respectively, the terminal does not support changing the transmit power at a transmission occasion, and the user cannot determine that a panel also performs a transmission on a PUSCH when determining the transmit power of another panel, then the processing is performed by priority, for example, specifying that first performing a transmission on a PUSCH has a high priority.

In the solution provided in the embodiments of the present disclosure, by judging whether the panels of the terminal meet different conditions, different procedures are used to determine the transmit powers of the respective panels, thereby ensuring the accuracy of the determined transmit power of each panel and thus ensuring the reliability of the communication of the terminal based on the transmit power of the panel.

It should be noted that the above embodiments may be split into new embodiments, or combined with other embodiments to form new embodiments. The combination between embodiments is not limited in the present disclosure.

FIG. 8 shows a block diagram of a power determination apparatus according to an illustrative embodiment of the present disclosure. Referring to FIG. 8, the power determination apparatus includes: a receiving module 801 configured to receive power control information, and a processing module 802 configured to determine a transmit power of each panel for an uplink transmission based on the power control information. The power control information indicates a power control parameter set of each panel in a plurality of panels, the power control parameter set is used by the terminal to determine the transmit power of each panel, and the plurality of panels support the uplink transmission at the same moment according to respective transmit powers.

In some embodiments, the power control parameter set includes at least one of: a closed loop power index, a target open loop receiver power, a partial path loss compensation factor, or an estimated downlink path loss.

In some embodiments, the processing module 802 is configured to: determine a first transmit power of each panel based on the power control information, and determine the transmit power of each panel for the uplink transmission based on the first transmit power of each panel and a power limit.

In some embodiments, the power limit comprises a first power limit for each panel and/or a total power limit, and the processing module is configured to: determine a minimum transmit power between the first transmit power of each panel and the first power limit corresponding to each panel as the transmit power of each panel for the uplink transmission; or determine a minimum transmit power between the first transmit power of each panel and the total power limit as the transmit power of each panel for the uplink transmission; or determine the first transmit power of each panel as the transmit power of each panel for the uplink transmission; or determine the transmit power of each panel for the uplink transmission according to a ratio of the first transmit powers of the plurality of panels and the total power limit; or determine a transmit power of a panel with a higher priority to be a minimum value between the first transmit power and the first power limit of the panel with the higher priority according to a priority order of the plurality of panels, and back off a transmit power of a panel with a lower priority, so that the sum of the transmit powers determined for the plurality of panels is not greater than the total power limit.

In some embodiments, the processing module 802 is configured to: determine the minimum transmit power between the first transmit power of each panel and the first power limit corresponding to each panel as the transmit power of each panel for the uplink transmission if a PUSCH scheduled by a single DCI is transmitted by the plurality of panels; or determine the minimum transmit power between the first transmit power of each panel and the first power limit corresponding to each panel as the transmit power of each panel for the uplink transmission if PUSCHs scheduled by multiple DCIs are transmitted by the plurality of panels, respectively; or determine the minimum transmit power between the first transmit power of each panel and the first power limit corresponding to each panel as the transmit power of each panel for the uplink transmission if the sum of the first power limits for the plurality of panels is not greater than the total power limit, and the sum of the first transmit powers of the plurality of panels is not greater than the sum of the first power limits for the plurality of panels; or determine the minimum transmit power between the first transmit power of each panel and the first power limit corresponding to each panel as the transmit power of each panel for the uplink transmission if the sum of the first power limits of the plurality of panels is greater than the total power limit, and a PUSCH scheduled by a single DCI is transmitted by the plurality of panels; or if the sum of the first power limits for the plurality of panels is greater than the total power limit, PUSCHs scheduled by multiple DCIs are transmitted by the plurality of panels, respectively, time domain resources occupied by the plurality of panels are overlapped, and the terminal supports changing the transmit power at a transmission occasion, for a non-overlapped part, determine the minimum transmit power between the first transmit power of each panel and the first power limit corresponding to each panel as the transmit power of each panel for the uplink transmission; or determine the minimum transmit power between the first transmit power of each panel and the first power limit corresponding to each panel as the transmit power of each panel for the uplink transmission if the sum of the first power limits for the plurality of panels is greater than the total power limit, PUSCHs scheduled by multiple DCIs are transmitted by the plurality of panels, respectively, and the terminal does not support changing the transmit power at a transmission occasion; or if the sum of the first power limits for the plurality of panels is greater than the total power limit, the sum of the first transmit powers of the plurality of panels is not greater than the total power limit, PUSCHs scheduled by multiple DCIs are transmitted by the plurality of panels, respectively, time domain resources occupied by the plurality of panels are overlapped, and the terminal supports changing the transmit power at a transmission occasion, for a non-overlapped part, determine the minimum transmit power between the first transmit power of each panel and the first power limit corresponding to each panel as the transmit power of each panel for the uplink transmission.

In some embodiments, the processing module 802 is configured to: time domain resources occupied by PUSCHs scheduled by multiple DCIs transmitted by the plurality of panels being overlapped, the terminal supporting changing the transmit power at a transmission occasion, for a non-overlapped part, determine the minimum transmit power between the first transmit power of each panel and the total power limit as the transmit power of each panel for the uplink transmission; or the terminal not supporting changing the transmit power at a transmission occasion, PUSCHs scheduled by multiple DCIs being transmitted by the plurality of panels, the sum of the first transmit powers of the plurality of panels being not greater than the total power limit, determine the minimum transmit power between the first transmit power of each panel and the total power limit as the transmit power of each panel for the uplink transmission.

In some embodiments, the processing module 802 is configured to: determine the first transmit power of each panel as the transmit power of each panel for the uplink transmission if the sum of the first transmit powers of the plurality of panels is not greater than the total power limit.

In some embodiments, the processing module 802 is configured to: a PUSCH scheduled by a single DCI being transmitted by the plurality of panels, perform the step of determining the first transmit power of each panel as the transmit power of each panel for the uplink transmission if the sum of the first transmit powers of the plurality of panels is not greater than the total power limit; or in a case where it is determined that time domain resources occupied by the plurality of panels are overlapped, PUSCHs scheduled by multiple DCIs are transmitted by the plurality of panels, respectively, and the terminal supports changing the transmit power at a transmission occasion, for an overlapped part, perform the step of determining the first transmit power of each panel as the transmit power of each panel for the uplink transmission if the sum of the first transmit powers of the plurality of panels is not greater than the total power limit.

In some embodiments, the processing module 802 is configured to: determine the transmit power of each panel for the uplink transmission according to the ratio of the first transmit powers of the plurality of panels and the total power limit if the sum of the first transmit powers of the plurality of panels is greater than the total power limit.

In some embodiments, the processing module 802 is configured to: in a case where it is determined that time domain resources occupied by the plurality of panels are overlapped, PUSCHs scheduled by multiple DCIs are transmitted by the plurality of panels, respectively, and the terminal supports changing the transmit power at a transmission occasion, if the sum of the first transmit powers of the plurality of panels is greater than the total power limit, for an overlapped part, determine the transmit power of each panel for the uplink transmission according to the ratio of the first transmit powers of the plurality of panels and the total power limit; or determine the transmit power of each panel for the uplink transmission according to the ratio of the first transmit powers of the plurality of panels and the total power limit if the sum of the first transmit powers of the plurality of panels is greater than the total power limit in a case where the terminal does not support changing the transmit power at a transmission occasion, PUSCHs scheduled by multiple DCIs are transmitted by the plurality of panels, respectively, and it is determined that multiple panels perform the uplink transmission.

In some embodiments, the processing module 802 is configured to: determine the transmit power of the panel with the higher priority to be the minimum value between the first transmit power and the first power limit of the panel with the higher priority according to the priority order of the plurality of panels, and back off the transmit power of the panel with the lower priority, so that the sum of the transmit powers determined for the plurality of panels is not greater than the total power limit if the sum of the first transmit powers of the plurality of panels is greater than the total power limit; or determine the transmit power of the panel with the higher priority to be the minimum value between the first transmit power and the first power limit of the panel with the higher priority according to the priority order of the plurality of panels, and back off the transmit power of the panel with the lower priority, so that the sum of the transmit powers determined for the plurality of panels is not greater than the total power limit in a case where the terminal does not support changing the transmit power at a transmission occasion, PUSCHs scheduled by multiple DCIs are transmitted by the plurality of panels, respectively, and it is incapable of determining that multiple panels perform the uplink transmission; or determine the transmit power of the panel with the higher priority to be the minimum value between the first transmit power and the first power limit of the panel with the higher priority according to the priority order of the plurality of panels, and back off the transmit power of the panel with the lower priority, so that the sum of the transmit powers determined for the plurality of panels is not greater than the total power limit in a case where a PUSCH scheduled by a single DCI is transmitted by the plurality of panels, and the sum of the first transmit powers of the plurality of panels is not greater than the total power limit.

In some embodiments, the processing module 802 is configured to: in a case where it is determined that time domain resources occupied by the plurality of panels are overlapped, PUSCHs scheduled by multiple DCIs are transmitted by the plurality of panels, respectively, and the terminal supports changing the transmit power at a transmission occasion, if the sum of the first transmit powers of the plurality of panels is greater than the total power limit, for an overlapped part, determine the transmit power of the panel with the higher priority to be the minimum value between the first transmit power and the first power limit of the panel with the higher priority according to the priority order of the plurality of panels, and back off the transmit power of the panel with the lower priority, so that the sum of the transmit powers determined for the plurality of panels is not greater than the total power limit; or determine the transmit power of the panel with the higher priority to be the minimum value between the first transmit power and the first power limit of the panel with the higher priority according to the priority order of the plurality of panels, and back off the transmit power of the panel with the lower priority, so that the sum of the transmit powers determined for the plurality of panels is not greater than the total power limit if the sum of the first transmit powers of the plurality of panels being greater than the total power limit in a case where the terminal does not support changing the transmit power at a transmission occasion, PUSCHs scheduled by multiple DCIs are transmitted by the plurality of panels, respectively, and it is capable of determining that multiple panels perform the uplink transmission simultaneously.

In some embodiments, the processing module 802 is configured to: determine the first transmit power of each panel as the transmit power of each panel for the uplink transmission if the sum of the first power limits for the plurality of panels is greater than the total power limit, the sum of the first transmit powers of the plurality of panels is not greater than the total power limit, and a PUSCH scheduled by a single DCI is transmitted by the plurality of panels; or determine the first transmit power of each panel as the transmit power of each panel for the uplink transmission if the sum of the first power limits for the plurality of panels is greater than the total power limit, the sum of the first transmit powers of the plurality of panels is not greater than the total power limit, PUSCHs scheduled by multiple DCIs are transmitted by the plurality of panels, respectively, and the terminal does not support changing the transmit power at a transmission occasion.

In some embodiments, the processing module 802 is configured to: determine the transmit power of each panel for the uplink transmission according to the ratio of the first transmit powers of the plurality of panels and the sum of the first transmit powers of the plurality of panels if the sum of the first power limits for the plurality of panels is greater than the total power limit, the sum of the first transmit powers of the plurality of panels is greater than the total power limit, and a PUSCH scheduled by a single DCI is transmitted by the plurality of panels; or in a case where it is determined that time domain resources occupied by the plurality of panels are overlapped if the sum of the first power limits for the plurality of panels is greater than the total power limit, the sum of the first transmit powers of the plurality of panels is greater than the total power limit, the terminal supports changing the transmit power at a transmission occasion, and PUSCHs scheduled by multiple DCIs are transmitted by the plurality of panels, respectively, for an overlapped part, determine the transmit power of each panel for the uplink transmission according to the ratio of the first transmit powers of the plurality of panels and the sum of the first transmit powers of the plurality of panels; or determine the transmit power of each panel for the uplink transmission according to the ratio of the first transmit powers of the plurality of panels and the sum of the first transmit powers of the plurality of panels if the sum of the first power limits for the plurality of panels is greater than the total power limit, the sum of the first transmit powers of the plurality of panels is greater than the total power limit, the terminal does not support changing the transmit power at a transmission occasion, and PUSCHs scheduled by multiple DCIs are transmitted by the plurality of panels, respectively.

In some embodiments, the processing module 802 is configured to: in a case where it is determined that time domain resources occupied by the plurality of panels are overlapped if the sum of the first power limits for the plurality of panels is greater than the total power limit, the sum of the first transmit powers of the plurality of panels is greater than the total power limit, the terminal supports changing the transmit power at a transmission occasion, and PUSCHs scheduled by multiple DCIs are transmitted by the plurality of panels, respectively, for an overlapped part, sequentially determine the transmit powers of the respective panels for the uplink transmission according to the priority order of the plurality of panels and based on the first transmit powers of the panels until the sum of the determined transmit powers of the panels for the uplink transmission reaches the total power limit; or sequentially determine the transmit powers of the respective panels for the uplink transmission according to the priority order of the plurality of panels and based on the first transmit powers of the panels until the sum of the determined transmit powers of the panels for the uplink transmission reaches the total power limit if the sum of the first power limits for the plurality of panels is greater than the total power limit, the sum of the first transmit powers of the plurality of panels is greater than the total power limit, the terminal supports changing the transmit power at a transmission occasion, and PUSCHs scheduled by multiple DCIs are transmitted by the plurality of panels, respectively.

It should be noted that when realizing functions of the apparatus according to the above embodiments, an example for describing the individual functional modules classified by functions is given. In actual applications, the above functions may be assigned to different functional modules as needed, that is, an internal structure of the apparatus may be divided into different functional modules to complete all or some of the functions described above. In addition, the apparatus and method embodiments provided in the above embodiments belong to the same concept, and thus regarding specific implementations for the apparatus embodiments, reference may be made to details in the method embodiments, which will not be repeated here.

FIG. 9 shows a block diagram of a power determination apparatus according to an illustrative embodiment of the present disclosure. Referring to FIG. 9, the power determination apparatus includes a sending module 901 configured to send power control information. The power control information indicates a power control parameter set of each panel in a plurality of panels, the power control parameter set is used by the terminal to determine a transmit power of each panel, and the plurality of panels support an uplink transmission at the same moment according to respective transmit powers.

In some embodiments, the power control parameter set includes at least one of: a closed loop power index, a target open loop receiver power, a partial path loss compensation factor, or an estimated downlink path loss.

It should be noted that when realizing functions of the apparatus according to the above embodiments, an example for describing the individual functional modules classified by functions is given. In actual applications, the above functions may be assigned to different functional modules as needed, that is, an internal structure of the apparatus may be divided into different functional modules to complete all or some of the functions described above. In addition, the apparatus and method embodiments provided in the above embodiments belong to the same concept, and thus regarding specific implementations for the apparatus embodiments, reference may be made to details in the method embodiments, which will not be repeated here.

FIG. 10 shows a schematic block diagram of a communication device according to an illustrative embodiment of the present disclosure. The communication device includes: a processor 1001, a receiver 1002, a transmitter 1003, a memory 1004 and a bus 1005.

The processor 1001 includes one or more processing cores. The processor 1001 executes various functional applications and information processing by running software programs and modules.

The receiver 1002 and the transmitter 1003 may be implemented as one communication component, and the communication component may be a communication chip.

The memory 1004 is connected to the processor 1001 via the bus 1005.

The memory 1004 may be configured to store at least one program code, and the processor 1001 is configured to execute the at least one program code to implement individual steps in the above method embodiments.

Moreover, the communication device may be a terminal or a network device. The memory 1004 may be implemented using any type of volatile or non-volatile storage devices, or a combination thereof. The volatile or non-volatile storage devices include, but are not limited to, a magnetic or optical disk, an electrically erasable programmable read-only memory (EEPROM), an erasable programmable read only memory (EPROM), a static random-access memory (SRAM), a read-only memory (ROM), a magnetic memory, a flash memory, and a programmable read-only memory (PROM).

In an illustrative embodiment, a computer-readable storage medium is further provided. The computer-readable storage medium has stored therein an executable program code, and the executable program code is loaded and executed by the processor to implement the power determination methods performed by the communication device according to the above various method embodiments.

In an illustrative embodiment, a chip is provided, which includes a programmable logic circuit and/or program instructions for implementing the power determination methods according to various method embodiments when the chip is run on a terminal or a network device.

In an illustrative embodiment, a communication system is provided. The communication system includes a terminal configured to implement the power determination method as described above, and a network device configured to implement the power determination method as described above.

In an illustrative embodiment, a computer program product is provided. When the computer program product is executed by a processor of a terminal or a network device, it is configured to implement the power determination methods according to the above various method embodiments.

Those of ordinary skill in the art shall understand that all or some of the steps to implement the above embodiments may be completed by a hardware, or may be completed by programs commanding the related hardware. The programs may be stored in a computer-readable storage medium. The storage medium mentioned above may be a read-only memory, a magnetic disk, an optical disk, or the like.

The above descriptions only involve optional embodiments of the present disclosure and are not intended to limit the present disclosure. Any modifications, equivalent substitutions, and improvements made within the spirit and principle of the present disclosure shall be included in the protection scope of the present disclosure.

**Claims**

1. A power determination method, performed by a terminal and comprising:

   receiving power control information that indicates a power control parameter set of each panel in a plurality of panels, the power control parameter set is used by the terminal to determine a transmit power of each panel, and the plurality of panels support an uplink transmission at a same moment according to respective transmit powers; and
   determining the transmit power of each panel for the uplink transmission based on the power control information.

2. The power determination method according to claim 1, wherein the power control parameter set comprises at least one of:

   a closed loop power index;
   a target open loop receiver power;
   a partial path loss compensation factor; or
   an estimated downlink path loss.

3. The power determination method according to claim 1, wherein determining the transmit power of each panel for the uplink transmission based on the power control information comprises:

   determining a first transmit power of each panel based on the power control information; and
   determining the transmit power of each panel for the uplink transmission based on the first transmit power of each panel and a power limit.

4. The power determination method according to claim 3, wherein the power limit comprises a first power limit for each panel and/or a total power limit, and determining the transmit power of each panel for the uplink transmission based on the first transmit power of each panel and the power limit comprises:

determining a minimum transmit power between the first transmit power of each panel and the first power limit corresponding to each panel as the transmit power of each panel for the uplink transmission; or

determining a minimum transmit power between the first transmit power of each panel and the total power limit as the transmit power of each panel for the uplink transmission; or

determining the first transmit power of each panel as the transmit power of each panel for the uplink transmission; or

determining the transmit power of each panel for the uplink transmission according to a ratio of the first transmit powers of the plurality of panels and the total power limit; or

determining a transmit power of a panel with a higher priority to be a minimum value between the first transmit power and the first power limit of the panel with the higher priority and backing off a transmit power of a panel with a lower priority according to a priority order of the plurality of panels, so that a sum of the transmit powers determined for the plurality of panels is not greater than the total power limit.

5. The power determination method according to claim 4, wherein determining the minimum transmit power between the first transmit power of each panel and the first power limit corresponding to each panel as the transmit power of each panel for the uplink transmission comprises:

a physical uplink shared channel (PUSCH) scheduled by a single downlink control information (DCI) being transmitted by the plurality of panels, and determining the minimum transmit power between the first transmit power of each panel and the first power limit corresponding to each panel as the transmit power of each panel for the uplink transmission; or

PUSCHs scheduled by multiple DCIs being transmitted by the plurality of panels, and determining the minimum transmit power between the first transmit power of each panel and the first power limit corresponding to each panel as the transmit power of each panel for the uplink transmission; or

a sum of the first power limits for antenna panels being not greater than the total power limit, a sum of the first transmit powers of the plurality of panels being not greater than a sum of the first power limits for the plurality of panels, and determining the minimum transmit power between the first transmit power of each panel and the first power limit corresponding to each panel as the transmit power of each panel for the uplink transmission; or

a sum of the first power limits for antenna panels being greater than the total power limit, a PUSCH scheduled by a single DCI being transmitted by the plurality of panels, and determining the minimum transmit power between the first transmit power of each panel and the first power limit corresponding to each panel as the transmit power of each panel for the uplink transmission; or

a sum of the first power limits for the plurality of panels being greater than the total power limit, PUSCHs scheduled by multiple DCIs being transmitted by the plurality of panels, time domain resources occupied by the plurality of panels being overlapped, the terminal supporting changing the transmit power at a transmission occasion, and for a non-overlapped part, determining the minimum transmit power between the first transmit power of each panel and the first power limit corresponding to each panel as the transmit power of each panel for the uplink transmission; or

a sum of the first power limits for the plurality of panels being greater than the total power limit, PUSCHs scheduled by multiple DCIs being transmitted by the plurality of panels, the terminal not supporting changing the transmit power at a transmission occasion, and determining the minimum transmit power between the first transmit power of each panel and the first power limit corresponding to each panel as the transmit power of each panel for the uplink transmission; or

a sum of the first power limits for the plurality of panels being greater than the total power limit, a sum of the first transmit powers of the plurality of panels being not greater than the total power limit, PUSCHs scheduled by multiple DCIs being transmitted by the plurality of panels, time domain resources occupied by the plurality of panels being overlapped, the terminal supporting changing the transmit power at a transmission occasion, and for a non-overlapped part, determining the minimum transmit power between the first transmit power of each panel and the first power limit corresponding to each panel as the transmit power of each panel for the uplink transmission.

6. The power determination method according to claim 4, wherein determining the minimum transmit power between the first transmit power of each panel and the total power limit as the transmit power of each panel for the uplink transmission comprises:

time domain resources occupied by PUSCHs scheduled by multiple DCIs transmitted by the plurality of panels being overlapped, the terminal supporting changing the transmit power at a transmission occasion, and for a non-overlapped part, determining the minimum transmit power between the first transmit power of each panel and the total power limit as the transmit power of each panel for the uplink transmission; or

the terminal not supporting changing the transmit power at a transmission occasion, PUSCHs scheduled by multiple DCIs being transmitted by the plurality of panels, a sum of the first transmit powers of the plurality of panels being not greater than the total power limit, and determining the minimum transmit power between the first transmit power of each panel and the total power limit as the transmit power of each panel for the uplink transmission.

**7.** The power determination method according to claim 4, wherein determining the first transmit power of each panel as the transmit power of each panel for the uplink transmission comprises:
a sum of the first transmit powers of the plurality of panels being not greater than the total power limit, and determining the first transmit power of each panel as the transmit power of each panel for the uplink transmission.

**8.** The power determination method according to claim 7, wherein the sum of the first transmit powers of the plurality of panels being not greater than the total power limit, and determining the first transmit power of each panel as the transmit power of each panel for the uplink transmission comprise:

a PUSCH scheduled by a single DCI being transmitted by the plurality of panels, performing the step of the sum of the first transmit powers of the plurality of panels being not greater than the total power limit and determining the first transmit power of each panel as the transmit power of each panel for the uplink transmission; or
determining that time domain resources occupied by the plurality of panels are overlapped, PUSCHs scheduled by multiple DCIs are transmitted by the plurality of panels, respectively, and the terminal supports changing the transmit power at a transmission occasion, and for an overlapped part, performing the step of the sum of the first transmit powers of the plurality of panels being not greater than the total power limit and determining the first transmit power of each panel as the transmit power of each panel for the uplink transmission.

**9.** The power determination method according to claim 4, wherein determining the transmit power of each panel for the uplink transmission according to the ratio of the first transmit powers of the plurality of panels and the total power limit comprises:
a sum of the first transmit powers of the plurality of panels being greater than the total power limit, and determining the transmit power of each panel for the uplink transmission according to the ratio of the first transmit powers of the plurality of panels and the total power limit.

**10.** The power determination method according to claim 9, wherein the sum of the first transmit powers of the plurality of panels being greater than the total power limit, and determining the transmit power of each panel for the uplink transmission according to the ratio of the first transmit powers of the plurality of panels and the total power limit comprise:

determining that time domain resources occupied by the plurality of panels are overlapped, PUSCHs scheduled by multiple DCIs are transmitted by the plurality of panels, respectively, and the terminal supports changing the transmit power at a transmission occasion, and for an overlapped part, the sum of the first transmit powers of the plurality of panels being greater than the total power limit, and determining the transmit power of each panel for the uplink transmission according to the ratio of the first transmit powers of the plurality of panels and the total power limit; or
the terminal not supporting changing the transmit power at a transmission occasion, PUSCHs scheduled by multiple DCIs being transmitted by the plurality of panels, determining that multiple panels perform the uplink transmission, the sum of the first transmit powers of the plurality of panels being greater than the total power limit, and determining the transmit power of each panel for the uplink transmission according to the ratio of the first transmit powers of the plurality of panels and the total power limit.

**11.** The power determination method according to claim 4, wherein determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit comprise:

a sum of the first transmit powers of the plurality of panels being greater than the total power limit, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit; or

the terminal not supporting changing the transmit power at a transmission occasion, PUSCHs scheduled by multiple DCIs being transmitted by the plurality of panels, it being incapable of determining that multiple panels perform the uplink transmission, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit; or

a PUSCH scheduled by a single DCI being transmitted by the plurality of panels, a sum of the first transmit powers of the plurality of panels being not greater than the total power limit, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit.

12. The power determination method according to claim 11, wherein the sum of the first transmit powers of the plurality of panels being greater than the total power limit, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit comprises:

determining that time domain resources occupied by the plurality of panels are overlapped, PUSCHs scheduled by multiple DCIs are transmitted by the plurality of panels, respectively, and the terminal supports changing the transmit power at a transmission occasion, and for an overlapped part, the sum of the first transmit powers of the plurality of panels being greater than the total power limit, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit; or
the terminal not supporting changing the transmit power at a transmission occasion, PUSCHs scheduled by multiple DCIs being transmitted by the plurality of panels, it being capable of determining that multiple panels perform the uplink transmission simultaneously, the sum of the first transmit powers of the plurality of panels being greater than the total power limit, and determining the transmit power of the panel with the higher priority to be the minimum value between the first transmit power and the first power limit of the panel with the higher priority according to the priority order of the plurality of panels, and backing off the transmit power of the panel with the lower priority, so that the sum of the transmit powers determined for the plurality of panels is not greater than the total power limit.

13. The power determination method according to claim 6, wherein determining the first transmit power of each panel as the transmit power of each panel for the uplink transmission comprises:

a sum of the first power limits for the plurality of panels being greater than the total power limit, a sum of the first transmit powers of the plurality of panels being not greater than the total power limit, a PUSCH scheduled by a single DCI being transmitted by the plurality of panels, and determining the first transmit power of each panel as the transmit power of each panel for the uplink transmission; or
a sum of the first power limits for the plurality of panels being greater than the total power limit, a sum of the first transmit powers of the plurality of panels being not greater than the total power limit, PUSCHs scheduled by multiple DCIs being transmitted by the plurality of panels, the terminal not supporting changing the transmit power at a transmission occasion, and determining the first transmit power of each panel as the transmit power of each panel for the uplink transmission.

14. The power determination method according to claim 4, wherein determining the transmit power of each panel for the uplink transmission according to the ratio of the first transmit powers of the plurality of panels and a sum of the first transmit powers of the plurality of panels comprises:

a sum of the first power limits for antenna panels being greater than the total power limit, a sum of the first transmit powers of the plurality of panels being greater than the total power limit, a PUSCH scheduled by a single DCI being transmitted by the plurality of panels, and determining the transmit power of each panel for the uplink transmission according to the ratio of the first transmit powers of the plurality of panels and the sum of the first transmit powers of the plurality of panels; or
determining that time domain resources occupied by the plurality of panels are overlapped, a sum of the first power limits for the plurality of panels is greater than the total power limit, a sum of the first transmit powers of the plurality of panels is greater than the total power limit, the terminal supports changing the transmit power at a transmission occasion, and PUSCHs scheduled by multiple DCIs are transmitted by the plurality of panels, respectively, and for an overlapped part, determining the transmit power of each panel for the uplink transmission according to the ratio of the first transmit powers of the plurality of panels and the sum of the first transmit powers of the plurality of panels; or
a sum of the first power limits for antenna panels being greater than the total power limit, a sum of the first transmit powers of the plurality of panels being greater than the total power limit, the terminal not supporting changing the transmit power at a transmission occasion, PUSCHs scheduled by multiple DCIs being transmitted by the plurality of panels, and determining the transmit power of each panel for the uplink transmission according to the ratio of the first transmit powers of the plurality of panels and the sum of the first transmit powers of the plurality of panels.

15. The power determination method according to claim 4, wherein the power limit comprises the first power limit for each panel and the total power limit, and sequentially determining the transmit powers of the respective panels for the uplink transmission according to the priority order of the plurality of panels and based on the first transmit powers of the panels until the sum of the determined transmit powers of the panels for the uplink transmission reaches the power limit comprises:

determining that time domain resources occupied by the plurality of panels are overlapped, a sum of the first power limits for the plurality of panels is greater than the total power limit, a sum of the first transmit powers of the plurality of panels is greater than the total power limit, the terminal supports changing the transmit power at a transmission occasion, and PUSCHs scheduled by multiple DCIs are transmitted by the plurality of panels, respectively, and for an overlapped part, sequentially determining the transmit powers of the respective panels for the uplink transmission according to the priority order of the plurality of panels and based on the first transmit powers of the panels until the sum of the determined transmit powers of the panels for the uplink transmission reaches the power limit; or
a sum of the first power limits for the plurality of panels being greater than the total power limit, a sum of the first transmit powers of the plurality of panels being greater than the total power limit, the terminal supporting changing the transmit power at a transmission occasion, PUSCHs scheduled by multiple DCIs being transmitted by the plurality of panels, and sequentially determining the transmit powers of the respective panels for the uplink transmission according to the priority order of the plurality of panels and based on the first transmit powers of the panels until the sum of the determined transmit powers of the panels for the uplink transmission reaches the power limit.

16. A power determination method, performed by a network device and comprising:
sending power control information that indicates a power control parameter set of each panel in a plurality of panels, the power control parameter set is used by a terminal to determine a transmit power of each panel, and the plurality of panels support an uplink transmission at a same moment according to respective transmit powers.

17. The power determination method according to claim 16, wherein the power control parameter set comprises at least one of:

a closed loop power index;
a target open loop receiver power;
a partial path loss compensation factor; or
an estimated downlink path loss.

18. A power determination apparatus, comprising:

a receiving module configured to receive power control information that indicates a power control parameter set of each panel in a plurality of panels, the power control parameter set is used by the terminal to determine a transmit power of each panel, and the plurality of panels support an uplink transmission at a same moment according to respective transmit powers; and a processing module configured to determine the transmit power of each panel for the uplink transmission based on the power control information.

19. A power determination apparatus, comprising: a sending module configured to send power control information that indicates a power control parameter set of each panel in a plurality of panels, the power control parameter set is used by the terminal to determine a transmit power of each panel, and the plurality of panels support an uplink transmission at a same moment according to respective transmit powers.

20. A terminal, comprising:

   a processor; and
   a transceiver connected to the processor, wherein the processor is configured to load and execute executable instructions to implement the power determination method according to any one of claims 1 to 15.

21. A network device, comprising:

   a processor; and
   a transceiver connected to the processor, wherein the processor is configured to load and execute executable instructions to implement the power determination method according to any one of claims 16 to 17.

22. A communication system, comprising:

   a terminal configured to implement the power determination method according to any one of claims 1 to 15; and
   a network device configured to implement the power determination method according to any one of claims 16 to 17.

23. A computer-readable storage medium having stored therein executable program codes that, when loaded and executed by a processor, cause the power determination method according to any one of claims 1 to 17 to be implemented.

FIG. 1

FIG. 2

FIG. 3

terminal

network device

step 401, the network device sends power control information that indicates a power control parameter set of each panel in a plurality of panels, the power control parameter set is used by the terminal to determine a transmit power of each panel, and the plurality of panels support an uplink transmission at the same moment according to respective transmit powers

step 402, the terminal receives the power control information

step 403, the terminal determines the transmit power of each panel for the uplink transmission based on the power control information

FIG. 4

the terminal determines a first transmit power of each panel based on the power control information    501

the terminal determines the transmit power of each panel for the uplink transmission based on the first transmit power of each panel and a power limit    502

FIG. 5

TRP1   PDCCH                    PUSCH
TRP2      PDCCH                    PUSCH

FIG. 6

TRP1: CG-PUSCH | PUSCH | PUSCH | PUSCH

TRP2: DG-PUSCH | PUSCH | PUSCH

FIG. 7

receiving module — 801

processing module — 802

FIG. 8

sending module — 901

FIG. 9

processor — 1001 | transmitter — 1003

bus — 1005

receiver — 1002 | memory — 1004

FIG. 10

## INTERNATIONAL SEARCH REPORT

| International application No. |
|---|
| **PCT/CN2023/076605** |

**A.    CLASSIFICATION OF SUBJECT MATTER**

H04W52/14(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 多个, 两个, 每个, 面板, 功率, 参数, 相同, 同时, multi, two, each, panel, power, parameter, same, time

**C.    DOCUMENTS CONSIDERED TO BE RELEVANT**

| Category* | Citation of document, with indication, where appropriate, of the relevant passages | Relevant to claim No. |
|---|---|---|
| E | WO 2023102925 A1 (GUANGDONG OPPO MOBILE COMMUNICATIONS CO., LTD.) 15 June 2023 (2023-06-15)<br>description, page 1, line 12 to page 13, line 46 | 1, 3, 16, 18-23 |
| X | CN 113302987 A (LENOVO (SINGAPORE) PTE. LTD.) 24 August 2021 (2021-08-24)<br>description, paragraphs [0006]-[0197] | 1-23 |
| X | WO 2021155541 A1 (GUANGDONG OPPO MOBILE COMMUNICATIONS CO., LTD.) 12 August 2021 (2021-08-12)<br>description, page 1, paragraph 5 to page 12, paragraph 12 | 1-23 |
| A | CN 112703779 A (GUANGDONG OPPO MOBILE COMMUNICATIONS CO., LTD.) 23 April 2021 (2021-04-23)<br>entire document | 1-23 |
| A | WO 2022213272 A1 (APPLE INC. et al.) 13 October 2022 (2022-10-13)<br>entire document | 1-23 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 October 2023** | **18 October 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076605**

| Patent document cited in search report | | | Publication date (day/month/year) | Patent family member(s) | | | Publication date (day/month/year) |
|---|---|---|---|---|---|---|---|
| WO | 2023102925 | A1 | 15 June 2023 | None | | | |
| CN | 113302987 | A | 24 August 2021 | US | 2021168726 | A1 | 03 June 2021 |
| | | | | US | 11350370 | B2 | 31 May 2022 |
| | | | | US | 2022295415 | A1 | 15 September 2022 |
| | | | | EP | 3909312 | A1 | 17 November 2021 |
| | | | | WO | 2020144540 | A1 | 16 July 2020 |
| | | | | US | 2020229104 | A1 | 16 July 2020 |
| | | | | US | 10945216 | B2 | 09 March 2021 |
| WO | 2021155541 | A1 | 12 August 2021 | EP | 4099767 | A1 | 07 December 2022 |
| | | | | EP | 4099767 | A4 | 15 March 2023 |
| | | | | US | 2022369235 | A1 | 17 November 2022 |
| CN | 112703779 | A | 23 April 2021 | WO | 2020118574 | A1 | 18 June 2020 |
| WO | 2022213272 | A1 | 13 October 2022 | None | | | |

Form PCT/ISA/210 (patent family annex) (July 2022)